# EUROPEAN PATENT SPECIFICATION

(11) **EP 0 720 305 B1**
(45) Date of publication and mention of the grant of the patent: **13.04.2005**
(21) Application number: 95309460.4
(22) Date of filing: 27.12.1995
(51) Int. Cl.: H04B 1/38, H04M 1/72, H02J 7/00

(54) **Charging system for portable telephone set**
Ladesystem für tragbares Telefon
Systeme de charge pour un téléphone portable

(30) Priority: 27.12.1994 JP 32623194
(43) Date of publication of application: 03.07.1996
(73) Proprietor: NEC CORPORATION, Tokyo (JP)
(72) Inventor: Hashimoto, Kazuya, Minato-ku, Tokyo (JP)
(74) Representative: W.P. THOMPSON & CO.

(56) References cited:
- EP-A- 0 331 194
- DE-A- 4 036 479
- US-A- 5 150 031

## Description

A conventional portable telephone set comprises a power supply in which a secondary cell is employed and a power controller for controlling power consumed by the telephone. The power supply can be connected with a charger through charging terminals to charge current into the secondary cell. When the power supply is connected to the charger, a constant current(charging current) is flowed into the telephone from the charger, regardless of ON/OFF of power of the telephone.

For example, Japanese patent application laid-open JP 3 030 262 discloses a charger of a portable telephone set which can function as both a charger and an external power supply to omit a part of a power supply circuit and a circuit-changing switch in the telephone set.

However, in the conventional telephone, if the level of the charging current is predetermined to correspond to that in ON of the power in the telephone set, the charging current may exceed a required current value and overcharge a charging cell when the power of the telephone is turned OFF.

On the contrary, if the level of the charging current is predetermined to correspond to that in OFF of the power in the telephone set, the charging current may be below the required current value to fail in the charging when the power of telephone is turned ON.

A feature of a portable telephone set to be described below, by way of example, is that charging can be carried out stably regardless of whether power in the telephone is ON or OFF.

In a particular arrangement to be described below, by way of example, a portable telephone set, includes:
a power supply in which a secondary cell is employed;
a charging detector for detecting whether a charger for charging current into the secondary cell is connected to the power supply, wherein the charging detector outputs a detection signal when it detects that the charger is connected to the power supply; and
a power controller which controls to turn on power of the portable telephone set when receives the detection signal from the charging detector.

In the portable telephone set to be described, the power of the portable telephone set can be always turned ON when the charger is connected thereto, thereby keeping the charging current flowed from the charger a constant value as previously design. Additionnally, since the power is always turned ON when the charging situation is detected by the charging detector, an operator can confirm the charging situation through an indicator such as LCD, LED which is simultaneously turned on.

Furthermore, the indicator may also inform the charging time measured by a means for measuring a period when the detection signal is output, for example, a timer.

The following description and drawings disclose previously proposed arrangements, together with, by means of examples, the invention which is characterised in the appended claims, whose terms determine the extent of the protection conferred hereby.

In the drawings:-
FIG.1 is a block diagram showing a conventional portable telephone set,
FIG.2 is a graph showing a relation between current flowed from a charger and a ON/OFF situation of the power in a conventional portable telephone set,
FIG.3 is a block diagram showing a portable telephone set in a first preferred embodiment illustrative of the invention,
FIG.4 is a graph showing a relation between current flowed from a charger and a ON/OFF situation of the power in the portable telephone set in FIG.3, and
FIG.5 is a block diagram showing a portable telephone set in a second preferred embodiment illustrative of the invention.

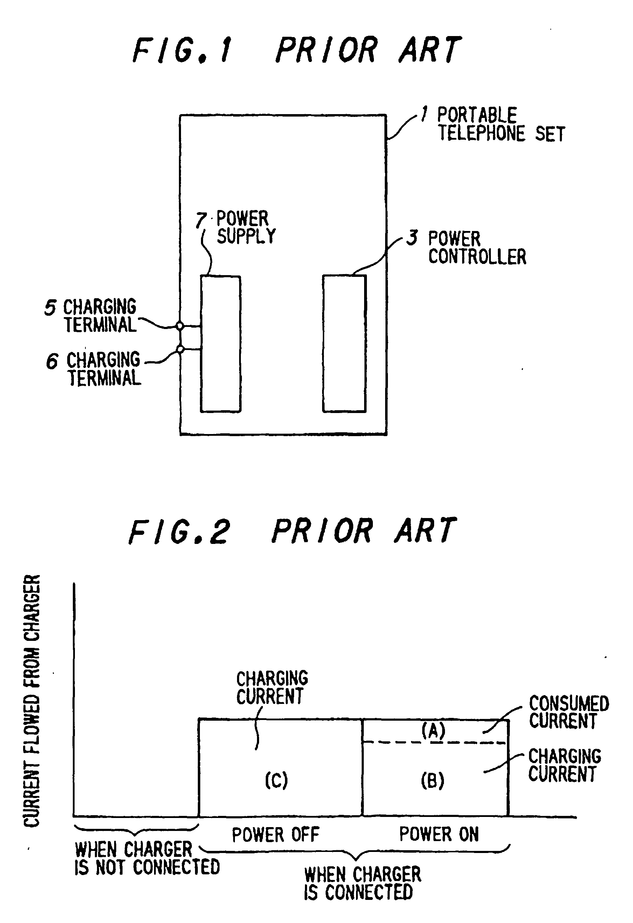

FIG.1 shows a conventional portable telephone set which comprises a telephone set 1 including a power supply 7 in which a secondary cell is employed and a power controller 3. The power supply 7 can be connected with a charger through charging terminals 5, 6. In operation, when the telephone set 1 is connected to the charger, ON/OFF situation of power is not changed thereby and current is supplied from the charger through the power supply 7 to the telephone set 1. If the power is OFF at the time of connection therebetween, the charging current flowed from the charger is mostly used to charge the power supply 7. On the other hand, if the power is ON at the time of connection therebetween, the charging current from the charger is divided into current consumed by the telephone set 1 and current used to charge the power supply 7 through the power supply 7. Namely, regardless of ON/OFF of the telephone set 1, a constant current(charging current) is flowed into the telephone set 1.

Accordingly, if the level of charging current flowed from the charger is, as shown in FIG.2, predetermined to correspond to that in ON situation of the power in the telephone set, the charging current supplied in OFF situation of the power may be excessive to reduce the performance of the power supply. In FIG.2, (A) means current consumed by the portable telephone set, and (B) and (C) mean charging current. Herein, the relation of (B)>(C) is established.

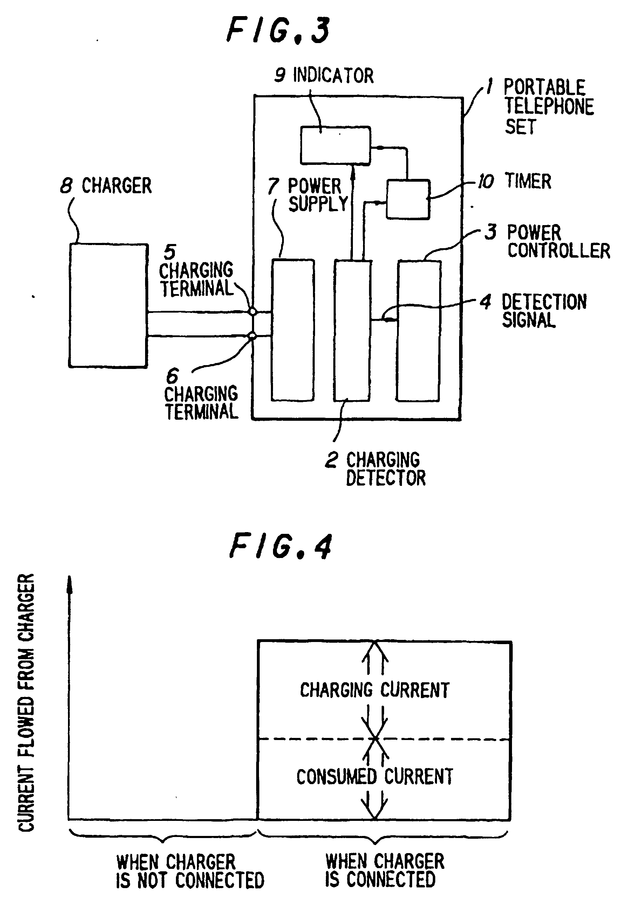

Next, a portable telephone set in a first preferred embodiment will be explained in FIG.3, wherein like parts are indicated by like reference numerals as used in FIG.1.

The portable telephone set in the first embodiment comprises a telephone set 1, a power supply 7 in which a secondary cell is employed, a charging detector 2 which detects that an external charger 8 is connected to the power supply 7 of the telephone set 1 and then outputs a detection signal 4, a power controller 3 which inputs the detection signal 4 to control the power of the telephone set 1, an indicator 9 for indicating that the detection signal 4 is output and a timer 10 for measuring the period when the detection signal 4 indicates that the charging continues.

Herein, the power controller 3 controls to always turn ON the power of the telephone set 1 when the charger 8 is connected to the power supply 7, whereby the charging current flowed from the charger 8 is kept at a constant value as previouly designed.

The indicator 9 may be LED(light emitting diode), LCD(liquid crystal display) or the like. The period measured by the timer 10 can be displayed by the indicator 9 to know a real amount of charging.

In operation, when the power supply 7 of telephone set 1 is connected with the charger 8 through charging terminals 5 and 6, the charging detector 2 detects the charging situation and outputs the detection signal 4 to the power controller 3. Then the power controller 3 controls to turn ON the power of the telephone set 1. Namely, the telephone set 1 is always controlled to turn ON during charging.

The current flowed from the charger 8 into the telephone set 1 is, as shown in FIG.4, composed of charging current and consumed current by the telephone 1. In FIG.4, the axis of ordinates indicates an amount of the current flowed from the charger 8, and the axis of abscissas indicates the cases that the charger 8 is not connected to the telephone set 1 and that the charger 8 is connected to the telephone set 1. Namely, the amount of the current flowed from the charger 8 into the telephone set 1 is a summation of "charging current required in the charging of the cell" and " current consumed by the telephone". Therefore, the failure in charging and overcharging can be avoided by supplying such constant amount of current. Herein, for example, the consumed current is about 400mA during a call (30mA during waiting a call), and the charging current is about 400mA.

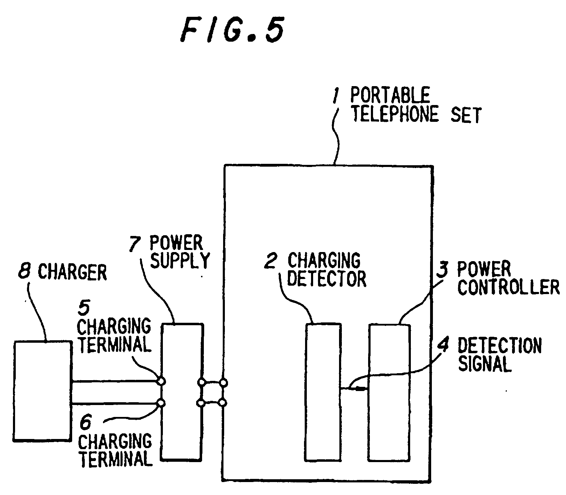

FIG.5 shows a portable telephone set in a second preferred embodiment illustrative of the invention, where a power supply 7 is separated from a portable telephone set body 1 which comprises a charging detector 2 and a power controller 3. The power supply 7 is positioned out of the telephone set 1 and is connected to the telephone set through lines. The power supply 7 is provided with charging terminals 5 and 6 for connecting to a charger 8.

In the above portable telephone set, the charging detector 2 in the telephone set 1 detects the connection with the charger 8, and the power controller 3 controls to always turn ON the power of the telephone set 1 when connected with the charger 8, regardless of ON/OFF of the power just before then.

Meanwhile, in the above embodiments, the detection as to whether or not the charger 8 is actually connected to the power supply 7 can be, for example, performed by detecting a voltage generated at the charging terminal 5 or 6. Herein, to prevent an operation error, the detection signal may be output only when the detected voltage exceeds a predetermined value. For example, the voltage generated at the terminal 5 or 6 can be detected in such a way that one terminal of a general-purpose comparator is connected with the charging terminal 5 or 6 and the other terminal thereof is connected to a reference voltage to measure a voltage difference therebetween.

Although the invention has been described with respect to specific embodiments for complete and clear disclosure, the appended claims are not to be thus limited but are to be construed as embodying all modification and alternative constructions that may occur to one skilled in the art which fairly fall within the scope of the appended claims.

## Claims

1. A portable telephone set (1), comprising:
a power supply (7) in which a secondary cell is employed;
a charging detector (2) for detecting whether a charger (8) for charging current into said secondary cell is connected to said power supply, wherein said charging detector outputs a detection signal (4) when it detects that said charger is connected to said power supply; and
a power controller (3) which controls to turn on power of said portable telephone set when receives said detection signal from said charging detector.

2. A portable telephone set, according claim 1, wherein:
said power supply is externally separated from said portable telephone set.

3. A portable telephone set, according to claim 1, further comprising:
means for indicating a situation of charging, wherein said indicating means operates when said detection signal is output.

4. A portable telephone set, according to claim 3, further comprising:
means for measuring a period when said detection signal is output, wherein said period is displayed by said indicating means.

5. A portable telephone set, according to claim 1, wherein:
said charging detector comprises means for detecting whether said charger is connected to said power supply, wherein said detecting means detects a voltage generated on a terminal of said power supply when said charger is connected to said power supply.

6. A portable telephone set, according to claim 5, wherein:
said detecting means compares a voltage difference between said voltage generated on said terminal and a reference voltage to output said detection signal when detecting said voltage generated on said terminal.

7. A portable telephone set, according to claim 6, wherein:
said detecting means outputs said detection signal when said voltage difference exceeds a predetermined value.

## Patentansprüche

1. Tragbares Telefon (1), das aufweist:
eine Stromversorgung (7), in der eine Sekundärzelle verwendet wird;
eine Ladeerkennungsvorrichtung (2) zur Erkennung, ob ein Ladegerät (8) zum Laden der Sekundärzelle mit Ladestrom mit der Stromversorgung verbunden ist, wobei die Ladeerkennungsvorrichtung ein Erkennungssignal (4) ausgibt, wenn sie erkennt, daß das Ladegerät mit der Stromversorgung verbunden ist; und
einen Stromregler (3), der das Einschalten des Stroms des tragbaren Telefons regelt, wenn er das Erkennungssignal von der Ladeerkennungsvorrichtung empfängt.

2. Tragbares Telefon nach Anspruch 1, wobei die Stromversorgung extern getrennt von dem tragbaren Telefon ist.

3. Tragbares Telefon nach Anspruch 1, das ferner eine Einrichtung zur Anzeige eines Ladezustands aufweist, wobei die Anzeigeeinrichtung arbeitet, wenn das Erkennungssignal ausgegeben wird.

4. Tragbares Telefon nach Anspruch 3, das ferner eine Einrichtung zum Messen einer Zeitspanne aufweist, wenn das Erkennungssignal ausgegeben wird, wobei die Zeitspanne von der Anzeigeeinrichtung angezeigt wird.

5. Tragbares Telefon nach Anspruch 1, wobei die Ladeerkennungseinrichtung eine Einrichtung zur Erkennung aufweist, ob das Ladegerät mit der Stromversorgung verbunden ist, wobei die Erkennungseinrichtung eine an einem Anschluß der Stromversorgung erzeugte Spannung ermittelt, wenn das Ladegerät mit der Stromversorgung verbunden ist.

6. Tragbares Telefon nach Anspruch 5, wobei die Erkennungseinrichtung eine Spannungsdifferenz zwischen der an dem genannten Anschluß erzeugten Spannung und einer Referenzspannung vergleicht, um das Erkennungssignal auszugeben, wenn sie die auf dem Anschluß erzeugte Spannung erkennt.

7. Tragbares Telefon nach Anspruch 6, wobei die Erkennungseinrichtung das Erkennungssignal ausgibt, wenn die Spannungsdifferenz einen vorbestimmten Wert übersteigt.

## Revendications

1. Appareil téléphonique portable (1), comprenant :
un bloc d'alimentation (7) dans lequel une cellule secondaire est utilisée ;
un détecteur de charge (2) pour détecter si un chargeur (8) permettant de charger du courant dans ladite cellule secondaire est connecté au dit bloc d'alimentation, dans lequel ledit détecteur de charge délivre un signal de détection (4) lorsqu'il détecte que ledit chargeur est connecté au dit bloc d'alimentation ; et
un contrôleur de puissance (3) qui commande l'alimentation dudit appareil téléphonique portable à réception dudit signal de détection provenant dudit détecteur de charge.

2. Appareil téléphonique portable, selon la revendication 1, dans lequel :
ledit bloc d'alimentation est séparé de l'extérieur dudit appareil téléphonique portable.

3. Appareil téléphonique portable, selon la revendication 1, comprenant en outre :
un moyen pour indiquer une situation de charge, dans lequel ledit moyen d'indication fonctionne lorsque ledit signal de détection est délivré.

4. Appareil téléphonique portable, selon la revendication 3, comprenant en outre :
un moyen pour mesurer une période au cours de laquelle ledit signal de détection est délivré, dans lequel ladite période est affichée par ledit moyen d'indication.

5. Appareil téléphonique portable, selon la revendication 1, dans lequel :
ledit détecteur de charge comprend un moyen pour détecter si ledit chargeur est connecté au dit bloc d'alimentation, dans lequel ledit moyen de détection détecte une tension générée sur une borne dudit bloc d'alimentation lorsque ledit chargeur est connecté au dit bloc d'alimentation.

6. Appareil téléphonique portable, selon la revendication 5, dans lequel :
ledit moyen de détection compare une différence de tension entre ladite tension générée sur ladite borne et une tension de référence pour délivrer ledit signal de détection lors de la détection de ladite tension générée sur ladite borne.

7. Appareil téléphonique portable, selon la revendication 6, dans lequel :
ledit moyen de détection délivre ledit signal de détection lorsque ladite différence de tension dépasse une valeur prédéterminée.
